(19) **Europäisches Patentamt**

**European Patent Office**

**Office européen des brevets**

(11) **EP 0 566 432 B1**

(12) **FASCICULE DE BREVET EUROPEEN**

(45) Date de publication et mention
de la délivrance du brevet:
**22.05.1996 Bulletin 1996/21**

(51) Int. Cl.⁶: **B04C 5/14**, B04C 5/13,
B04C 5/081, B01D 17/02,
B01D 21/26

(21) Numéro de dépôt: **93400596.8**

(22) Date de dépôt: **08.03.1993**

(54) **Séparateur triphasique à cyclone**

Dreiphasen-Zyklonabscheider

Three-phase cyclone separator

(84) Etats contractants désignés:
**AT BE CH DE DK ES FR GB GR IE IT LI LU NL PT
SE**

(30) Priorité: **15.04.1992 FR 9204608**

(43) Date de publication de la demande:
**20.10.1993 Bulletin 1993/42**

(73) Titulaire: **ELF AQUITAINE PRODUCTION
F-92400 Courbevoie (FR)**

(72) Inventeurs:
• **Seureau, Jacques
F-31420 Aulon (FR)**
• **Bu-Feng, Ma
F-31800 Saint-Gaudens (FR)**

• **Aurelle, Yves
F-31140 Aucamville (FR)**
• **Hadjiev, Dimitre
F-31000 Toulouse (FR)**

(74) Mandataire: **Timoney, Ian Charles Craig et al
Elf Aquitaine Production
Département Propriété Industrielle
Tour Elf
Cédex 45
F-92078 Paris La Défense (FR)**

(56) Documents cités:
EP-A- 0 259 104      WO-A-84/02664
WO-A-85/01454      WO-A-86/07549
AU-D- 4 364 968      DE-A- 2 224 458
US-A- 2 717 695      US-A- 2 816 490

**Description**

La présente invention se rapporte à un séparateur triphasique à cyclone.

Les séparateurs, plus communément appelés "hydrocyclones", sont généralement destinés à séparer deux phases non miscibles de densités différentes. Dans ce type de séparateur, le mélange des deux phases est injecté à haute vitesse dans une chambre qui est généralement cylindrique afin que le mélange se déplace à l'intérieur de la chambre selon un mouvement giratoire. Les densités différentes des deux phases provoquent une migration de la phase plus dense vers la paroi de la chambre, sous l'effet de la force centrifuge générée par le mouvement giratoire, la phase plus légère restant vers l'intérieur de la chambre. En disposant deux sorties des phases, l'une vers la paroi de la chambre et l'autre selon l'axe de la chambre, les deux phases peuvent être séparés. Ce principe de fonctionnement peut être utilisé pour séparer une émulsion huile/eau en ses deux composantes. Le document US 4,749,490 décrit un séparateur du type hydrocyclone comprenant un corps formé d'une partie cylindrique, munie d'une entrée tangentielle et d'une sortie axiale, et reliée à un élément tubulaire de faible conicité par une partie conique. Une émulsion huile/eau, injectée par l'entrée tangentielle suit un parcours giratoire à l'intérieur de la partie cylindrique. L'huile, étant de densité inférieure à celle de l'eau, migre vers l'intérieur du corps et sort par la sortie axiale tandis que l'eau, qui est plus dense, tend à longer la paroi du corps vers l'élément tubulaire de faible conicité. L'eau dépourvue d'huile est évacuée par une sortie à l'extrémité libre de l'élément tubulaire.

Ce type d'hydrocyclone présente l'inconvénient de ne pas être adapté à la séparation d'un émulsion triphasique.

Le document WO-A-85/01454 décrit un séparateur à cyclone destiné à traiter des mélanges de liquides dense et moins dense. Ce séparateur est muni de trois sorties, une sortie axiale à une extrémité de la partie cylindrique, et deux sorties coaxiales disposées vers le sommet de la partie sensiblement conique, l'une pour le liquide dense et l'autre pour le moins dense.

Dans certains domaines, par exemple lors du traitement des eaux de rejets d'un puits pétrolier, on est confronté à une émulsion huile/eau qui contient des matières solides en suspension. Ces matières peuvent être par exemple du sable. Un séparateur tel que celui décrit dans le document US 4,749,490 permet de séparer la phase liquide légère des deux autres phases qui restent mélangées. La présence de sable dans l'eau passant par l'hydrocyclone provoque l'érosion de la paroi interne, érosion qui peut réduire considérablement l'efficacité du séparateur.

La présente invention a pour objet de proposer un séparateur à cyclone adapté à la séparation d'un mélange de trois phases formé de deux fluides de densités différentes et d'une phase solide en suspension.

Pour ce faire, l'invention propose un séparateur triphasique à cyclone comprenant un corps formé d'une partie cylindrique prolongée à l'une de ses extrémités par une partie sensiblement conique convergente, au moins une entrée montée tangentiellement sur la partie cylindrique et un élément sensiblement tubulaire monté sur le corps en communication hydraulique avec ce dernier, l'élément sensiblement tubulaire étant monté sur l'élément cylindrique, à une extrémité opposée à la partie sensiblement conique, la partie sensiblement conique étant munie, vers son sommet, de deux sorties, caractérisé en ce que l'élément sensiblement tubulaire est formé d'une partie de faible conicité et d'une prolongation cylindrique.

L'hydrocyclone selon l'invention permet de séparer, dans un premier temps, la phase solide en suspension, et, dans une deuxième phase, de séparer les deux fluides de densités différentes.

En retirant, d'abord le phase solide, l'érosion de la paroi interne du séparateur est réduite à un minimum.

D'autres avantages et caractéristiques apparaîtront à la lecture de la description donnée, à titre indicatif mais non limitatif, d'un mode de réalisation préféré de l'invention, ainsi que des dessins annexés sur lesquels :

-   la figure 1 est une vue schématique en coupe longitudinale d'un séparateur à cyclone selon la présente invention, et
-   la figure 2 est une vue analogue à celle de la figure 1 indiquant les dimensions relatives de l'appareil.

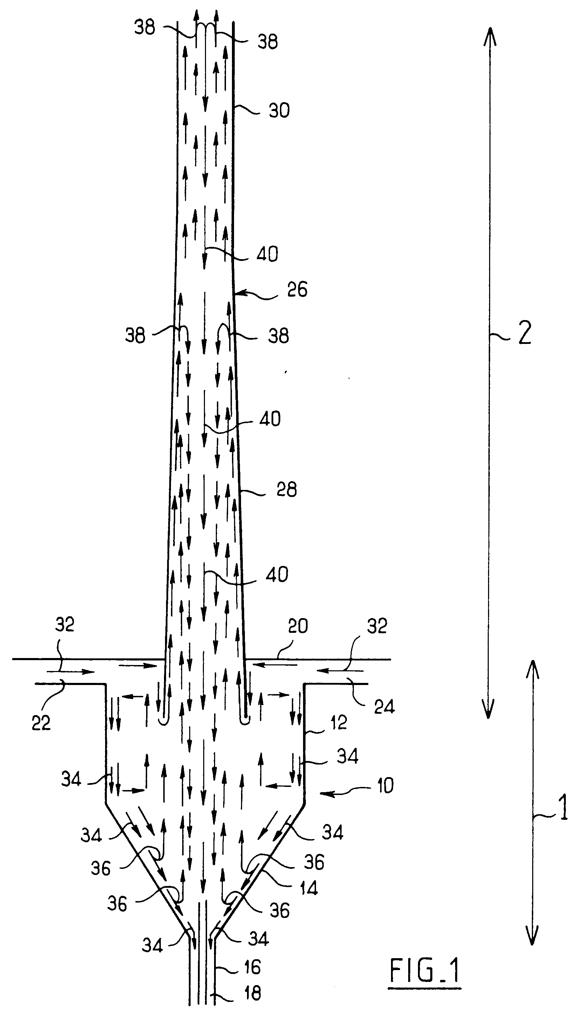

Comme représenté sur la figure 1, un séparateur à cyclone selon l'invention comprend un corps 10 formé d'une partie cylindrique 12 et une partie conique 14. La partie conique 14 est munie, vers le sommet du cône, d'un embout cylindrique 16 à l'intérieur duquel est disposée une sortie tubulaire 18, les deux disposés coaxialement à la partie cylindrique 12.

Le corps 10 est fermé par un élément annulaire 20 qui comporte deux entrées 22 et 24, disposées tangentiellement par rapport à la partie cylindrique 12. Les deux entrées sont montées diamétralement opposées sur l'élément annulaire 20 en sens inverse l'une de l'autre. L'élément annulaire 20 reçoit, de façon étanche, un élément 26 sensiblement tubulaire disposé coaxialement au corps 10 et formé d'une partie 28 de faible conicité et d'une prolongation cylindrique 30.

L'hydrocyclone ainsi décrit fonctionne de la manière suivante.

Une émulsion huile/eau contenant des matières solides en suspension est envoyée sous pression dans le corps 10 par les deux entrées 22 et 24. La vitesse d'écoulement du fluide est de l'ordre de 8 à 10 m/s. En entrant dans le corps 10 tangentiellement dans le sens des flèches 32, l'émulsion circule à vitesse élevée selon un mouvement giratoire à l'intérieur de la partie cylindrique 12. Sous l'effet de la force centrifuge ainsi générée, les matières solides en suspension migrent vers les parois de la partie cylindrique 12 et de la partie conique 14 et s'évacuent par l'embout 16, comme l'indiquent les flèches 34.

La forme conique de la partie 14 contraint l'émulsion huile/eau, dépourvue de matières solides, à changer de sens d'écoulement longitudinal comme l'indiquent les flèches 36 et à passer dans l'élément tubulaire 26 tout en continuant à circuler selon son mouvement giratoire. Les deux phases de l'émulsion se séparent lors du passage de l'émulsion le long de la partie 28 de faible conicité et de la prolongation cylindrique 30, l'eau se trouvant vers la paroi des parties 28 et 30 et l'huile se trouvant à l'intérieur. L'extrémité distale de la prolongation cylindrique 30 comporte une restriction formée soit par une vanne partiellement fermée soit par une restriction fixe (non représentées). Une contre-pression provoquée par cette restriction s'applique à l'extrémité de la prolongation cylindrique 30. Cette contre-pression agit sur l'huile et lui fait inverser son sens d'écoulement comme l'indiquent les flèches 38. Un courant d'huile se dirige ainsi en sens inverse de la direction d'écoulement de l'émulsion huile/eau, formant un cordon représenté par les flèches 40. L'huile séparée de l'eau suit ainsi un chemin axial, en sens inverse de celui de l'écoulement de l'émulsion, sur la longueur de l'hydrocyclone et sort par la sortie tubulaire 18, l'eau purifiée sortant à travers la restriction à l'extrémité opposée de l'hydrocyclone.

L'hydrocyclone selon l'invention comporte, ainsi, deux zones de séparation, une première zone 1 de séparation solide/liquide et une deuxième zone 2 de séparation liquide/liquide. La faible différence de densité entre l'eau et l'huile a pour résultat que, même avec des vitesses tangentielles élevées la longueur de la partie 28 à faible conicité doit être importante afin d'assurer la séparation des deux médias.

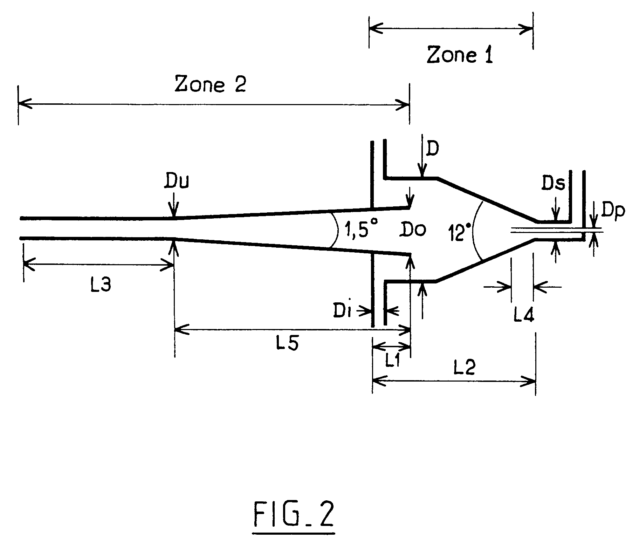

La récupération de cordon huileux 40 à l'extrémité opposée à la sortie d'eau permet non seulement d'améliorer l'efficacité de l'hydrocyclone mais permet également d'éviter d'entraîner vers l'élément 26 des matières solides en suspension, le courant axial d'huile oblige les matières solides à suivre le chemin des flèches 34. La partie 28 de faible conicité fait saillie sur une distance L1 à l'intérieur de la partie cylindrique 12 du corps 10 (voir figure 2). La présence de cette saillie à l'intérieur de la partie cylindrique 12 empêche l'émulsion entrant par les entrées 22 et 24 de passer directement dans l'élément 26 et l'oblige, ainsi, à suivre un chemin giratoire à l'intérieur du corps 10. Dans le même but, la sortie 18 se prolonge à l'intérieur de la partie conique 14 du corps 10 afin que les matières solides s'évacuent uniquement par l'embout 16, le cordon d'huile passant par la sortie tubulaire 18.

L'efficacité de l'hydrocyclone selon l'invention est fonction des rapports entre les dimensions des divers éléments formant l'appareil. Ces dimensions sont indiquées schématiquement sur la figure 2.

Les rapports suivants sont donnés à titre d'exemple :

$$\frac{Do}{D} < 0{,}9 \quad \frac{L1}{D} > 0{,}05 \quad \frac{L2}{D} > 0{,}5 \quad \frac{Du}{Do} < 0{,}96 \quad \frac{Ds}{D} > 0{,}01 \quad \frac{Dp}{D} > 0{,}005 \quad \frac{Du}{D} < 0{,}9 \quad \frac{L3}{D} > 1 \quad \frac{L4}{D} < 2 \quad \frac{L5}{D} > 1$$

$$50 > \frac{S_D}{Si} > 6$$

où $S_D$ = la Section correspondant au diamètre D,
et Si = la somme des sections d'entrée.

Dans un mode de réalisation préféré, les rapports sont les suivants :

$$\frac{Do}{D} = 0{,}4375 \quad \frac{Di}{D} = 0{,}175 \quad \frac{L1}{D} = 0{,}4 \quad \frac{L2}{D} = 4{,}87 \quad \frac{Ds}{D} = 0{,}19 \quad \frac{Dp}{D} = 0{,}034 \quad \frac{Du}{D} = 0{,}28 \quad \frac{L3}{D} = 15 \quad \frac{L4}{D} = 0{,}3$$

L'hydrocyclone selon l'invention présente l'avantage de permettre la séparation, dans un premier temps, de matières solides de densité supérieure à celle de l'eau, puis de séparer des hydrocarbures de l'eau. L'utilisation de ce type d'hydrocyclone permet de supprimer un étage de pré-traitement de l'effluent tel qu'utilisé dans les séparateurs du type Lakos, et ceci sans augmenter pour autant l'encombrement de l'hydrocyclone.

Ce type d'hydrocyclone trouve son application dans le traitement des eaux de rejet, dans le traitement des eaux en vue de leur ré-injection et dans le traitement des eaux de raffinerie ou de la pétrochimie.

L'hydrocyclone selon l'invention peut comporter une seule entrée 22 ou plusieurs entrées similaires disposées tangentiellement et uniformément réparties sur la périphérie de la partie cylindrique 12. L'embout cylindrique formant la sortie 16 peut être conique convergent ou conique divergent.

**Revendications**

1. Séparateur triphasique à cyclone comprenant un corps (10) formé d'une partie cylindrique (12) prolongée à l'une de ses extrémités par une partie sensiblement conique (14) convergente, au moins une entrée (22 ; 24) montée tangentiellement sur la partie cylindrique (12) et un élément sensiblement tubulaire (26) monté sur le corps (10) en communication hydraulique avec ce dernier, l'élément sensiblement tubulaire (26) étant monté sur l'élément cylindrique (12), à une extrémité opposée à la partie sensiblement conique (14), la partie sensiblement conique (14) étant munie, vers son sommet, de deux sorties (16, 18), caractérisé en ce que l'élément sensiblement tubulaire (26) est formé d'une partie (28) de faible conicité et d'une prolongation cylindrique (30).

2. Séparateur selon la revendication 1 caractérisé en ce que l'élément sensiblement tubulaire (26) est monté sur un élément (20) fermant l'extrémité de la partie cylindrique (12) opposée à la partie sensiblement conique (14), l'élément sensiblement tubulaire (26) faisant saillie dans le corps (20) au-delà de l'élément (20).

3. Séparateur selon la revendication 1 ou 2 caractérisé en ce que l'une des sorties (16) est formée d'un embout cylindrique, l'autre sortie (18) comprenant un tube disposé à l'intérieur de l'embout.

4. Séparateur selon l'une des revendications 1 à 3 caractérisé en ce que l'élément sensiblement tubulaire (26), le corps (10) et les sorties (16, 18) sont disposés coaxialement.

5. Séparateur selon l'une des revendications 1 à 4 caractérisé en ce qu'il comprend deux entrées (22 ; 24) montées tangentiellement sur la partie cylindrique (12), diamétralement opposées l'une par rapport à l'autre.

**Claims**

1. Three-phase cyclone separator comprising a body (10) formed by a cylindrical portion (12) extended at one of its ends by a substantially conical converging portion (14), at least one inlet (22; 24) mounted tangentially on the cylindrical portion (12) and a substantially tubular element (26) mounted on the body (10) in hydraulic communication therewith, the substantially tubular element (26) being mounted on the cylindrical element (12) at the opposite end to the substantially conical portion (14), the substantially conical portion (14) being provided, towards its apex, with two outlets (16, 18), characterized in that the substantially tubular element (26) is formed by a portion (28) with a slight taper and by a cylindrical extension (30).

2. Separator according to Claim 1, characterized in that the substantially tubular element (26) is mounted on an element (20) closing the opposite end of the cylindrical portion to the substantially conical portion (14), the substantially tubular element (26) projecting into the body (10) beyond the element (20).

3. Separator according to Claim 1 or Claim 2, characterized in that one of the outlets (16) is formed by a cylindrical nozzle, the other outlet (18) comprising a tube disposed inside the nozzle.

4. Separator according to any one of Claims 1 to 3, characterized in that the substantially tubular element (26), the body (10) and the outlets (16, 18) are arranged coaxially.

5. Separator according to any one of Claims 1 to 4, characterized in that it comprises two inlets (22; 24) mounted tangentially diametrally opposite one another on the cylindrical portion (12).

**Patentansprüche**

1. Dreiphasen-Zyklonabscheider mit einem Gehäuse (10), das von einem zylindrischen Teil (12) gebildet wird, der an einem seiner Enden durch einen im wesentlichen konischen, konvergenten Teil (14) verlängert ist, mit mindestens einem tangential auf dem zylindrischen Teil (12) angeordneten Einlaß (22; 24) und mit einem im wesentlichen rohrförmigen Element (26), das auf dem Gehäuse (10) in hydraulischer Verbindung mit ihm angeordnet ist, wobei das im wesentlichen rohrförmige Element (26) auf dem zylindrischen Element (12) an einem dem im wesentlichen konischen Teil (14) gegenüberliegenden Ende angeordnet ist und der im wesentlichen konische Teil (14) zu seiner Spitze hin mit zwei Auslässen (16, 18) versehen ist, dadurch gekennzeichnet, daß das im wesentlichen rohrförmige Element (26) von einem Teil (28) mit geringer Konizität und einer zylindrischen Verlängerung (30) gebildet ist.

2. Abscheider nach Anspruch 1, dadurch gekennzeichnet, daß das im wesentlichen rohrförmige Element (26) auf einem Element (20) angeordnet ist, das das dem im wesentlichen konischen Teil (14) gegenüberliegende Ende des zylindrischen Teils (12) abschließt, wobei das im wesentlichen rohrförmige Element (26) in das Gehäuse (20) über das Element (20) vorsteht.

3. Abscheider nach Anspruch 1 oder 2, dadurch gekennzeichnet, daß der eine Auslaß (16) von einem zylindrischen Ansatzstück gebildet wird, während der andere Auslaß (18) ein im Inneren des Ansatzstückes angeordnetes Rohr aufweist.

4. Abscheider nach einem der Ansprüche 1 bis 3, dadurch gekennzeichnet, daß das im wesentlichen rohrförmige Element (26), das Gehäuse (10) und die Auslässe (16, 18) koaxial angeordnet sind.

5. Abscheider nach einem der Ansprüche 1 bis 4, dadurch gekennzeichnet, daß er zwei Einlässe (22; 24) aufweist, die tangential auf dem zylindrischen Teil (12) einander diametral gegenüberliegend angeordnet sind.

FIG.1

FIG. 2